# FASCICULE DE BREVET EUROPEEN

(11) **EP 4 475 044 B1**
(45) Date de publication et mention de la délivrance du brevet: **14.01.2026**
(21) Numéro de dépôt: 23305900.5
(22) Date de dépôt: 06.06.2023
(51) Int. Cl.: G06N 20/00, G06N 3/092, G06N 3/006

(54) **PROCEDE DE PARAMETRAGE D'UNE CHAINE DE TRAITEMENT DE DONNEES**
VERFAHREN ZUR PARAMETRIERUNG EINER DATENVERARBEITUNGSLEITUNG
METHOD FOR SETTING UP A DATA PROCESSING CHAIN

(43) Date de publication de la demande: 11.12.2024
(73) Titulaire: ATOS FRANCE, 95870 Bezons (FR)
(72) Inventeur: LECROART, Yannick, 34280 LA GRANDE MOTTE (FR); ROGERS, Nelson, 34170 CASTELNAU-LE-LEZ (FR)
(74) Mandataire: Novagraaf Technologies

(56) Documents cités:
- CN-A- 111 389 006
- FR-A1- 3 111 250
- US-A1- 2018 032 864
- CHAO CHEN ET AL: "Deep Anomaly Detection and Search via Reinforcement Learning", ARXIV.ORG, CORNELL UNIVERSITY LIBRARY, 201 OLIN LIBRARY CORNELL UNIVERSITY ITHACA, NY 14853, 31 August 2022 (2022-08-31), XP091306609

## Description

### Domaine technique

La présente invention concerne un procédé de paramétrage d'une chaîne de traitement de données.

L'invention concerne également un programme d'ordinateur et un dispositif mettant en œuvre un tel procédé.

L'invention s'applique au domaine de la maintenance prédictive.

### État de la technique

Dans le cadre de l'implémentation d'un projet IoT (de l'anglais *« Internet of Things »,* ou internet des objets), il est connu de disposer des d'objets connectés, en particulier des capteurs, dans un environnement donné à surveiller (par exemple, une installation), et ce afin de le rendre « intelligent », c'est-à-dire capable de remonter des données (telles que des mesures) représentatives d'évènements qui y ont lieu.

En outre, il est connu de mettre en œuvre des stratégies de maintenance prédictive pour anticiper d'éventuelles anomalies au sein de l'environnement, au niveau desdits objets (par exemple, des dysfonctionnements), de façon à prévenir les pannes et limiter les temps d'arrêt. De cette façon, les objets connectés font partie d'un système de maintenance prédictive.
Le document FR 3111250 A1 divulgue un procédé de détection d'anomalies dans un réseau de communication, comprenant la détermination par un module de validation d'une valeur de récompense pour une anomalie détectée, positive si l'anomalie correspond bien à une défaillance, et négative sinon. Cette valeur de récompense accompagne les données de mesures dans un message de validation envoyé au module de détection, lequel évalue un taux de récompenses positives afin d'ajuster la fréquence des phases d'apprentissage appliquées au modèle de prédiction pendant la phase d'exécution. En cas de taux faible persistant, le modèle est mis à jour avec un nouvel ensemble de données d'apprentissage ou bien remplacé.

Néanmoins, de tels systèmes de maintenance prédictive ne donnent pas entière satisfaction.

En effet, les systèmes de maintenance prédictive connus sont susceptibles de fournir des faux-positifs, c'est-à-dire de prédire, à partir des données remontées par un ou plusieurs capteur(s), l'occurrence d'une anomalie au sein de l'installation surveillée, alors même que ladite installation surveillée présente, en réalité, un comportement normal. Ceci conduit à des interventions inopportunes sur site de la part d'opérateurs en charge de la maintenance de l'installation.

Or, l'accès physique à tout ou partie de l'installation est parfois complexe, par exemple en raison de la nature et du profil du terrain sur lequel elle se situe (égouts, canalisations, turbines, par exemple). De telles interventions sont donc longues et coûteuses, et sont susceptibles d'engendrer des pertes sèches pour l'exploitant. En outre, elles résultent en une gêne dispensable pour les opérateurs.

De tels faux-positifs sont également susceptibles de déclencher des interventions requérant la mise à l'arrêt de l'installation pour maintenance, ce qui engendre des pertes financières additionnelles.

Par conséquent, le coût inhérent à la gestion et la maintenance dans le cadre d'un projet IoT est un véritable enjeu pour les collectivités et les entreprises, dans la mesure où ce coût est susceptible de compromettre la rentabilité du projet.

Un but de la présente invention est de remédier à au moins un des inconvénients de l'état de la technique.

Un autre but de l'invention est de proposer une solution de maintenance prédictive qui présente une meilleure capacité à prédire des anomalies que les solutions existantes.

### Exposé de l'invention

À cet effet, l'invention concerne un procédé du type précité, la chaîne de traitement comportant un étage de prédiction mettant en œuvre un modèle d'intelligence artificielle courant, préalablement entraîné sur la base d'un jeu de données d'entraînement, pour prédire une anomalie au niveau d'un environnement surveillé muni d'au moins un capteur, à partir de données d'entrée reçues en provenance de chaque capteur, le modèle d'intelligence artificielle courant étant associé à un score de précision courant, représentatif d'une concordance entre, d'une part, un premier état prédit de l'environnement surveillé, déterminé par le modèle d'intelligence artificielle courant à partir de données de test dépendant des données d'entrée, et, d'autre part, un état réel de l'environnement surveillé pour lesdites données de test, le procédé de paramétrage étant mis en œuvre par ordinateur et comprenant une mise en œuvre d'un algorithme par renforcement comprenant les étapes de :
- sélection d'un jeu de données parmi un ensemble de jeux de données stockés dans une mémoire, en fonction d'une récompense associée à chaque jeu de données ;
- entraînement d'un modèle d'intelligence artificielle sur la base du jeu de données sélectionné pour obtenir un modèle d'intelligence artificielle expérimental ;
- calcul d'un score de précision expérimental du modèle d'intelligence artificielle expérimental, représentatif d'une concordance entre, d'une part, un deuxième état prédit de l'environnement surveillé, déterminé par le modèle d'intelligence artificielle expérimental à partir des données de test, et, d'autre part, l'état réel de l'environnement surveillé pour les données de test ; et
- en fonction d'un résultat d'une comparaison entre le score de précision courant et le score de précision expérimental :
   - remplacement ou non, dans l'étage de prédiction, du modèle d'intelligence artificielle courant par le modèle d'intelligence artificielle expérimental ; et
   - mise à jour de la récompense associée au jeu de données sélectionné.

En effet, un tel procédé résulte en une optimisation permanente du modèle d'intelligence artificielle mis en œuvre pour la prédiction d'anomalies, ce qui lui confère une plus grande fiabilité que les solutions existantes.

En outre, grâce à la mise en œuvre d'un algorithme par renforcement, le modèle d'intelligence artificielle est entraîné sur la base du jeu de données qui conduit aux résultats les plus précis au regard des données de test, qui dépendent des données d'entrée, donc des données réellement remontées par les capteurs. La mise en place et la modification dans le temps, par un agent humain, de règles explicites relatives aux jeux de données sur la base desquels les modèles d'intelligence artificielle doivent être entraînés est donc inutile, ce qui confère une grande simplicité d'implémentation au procédé selon l'invention.

De façon avantageuse, le procédé selon l'invention présente une ou plusieurs des caractéristiques suivantes, prises isolément ou selon toute combinaison techniquement possible :
si le score de précision expérimental est supérieur au score de précision courant :
   - le modèle d'intelligence artificielle courant est remplacé par le modèle d'intelligence artificielle expérimental ; et
   - la mise à jour de la récompense associée au jeu de données sélectionné est une augmentation de ladite récompense ;
si le score de précision expérimental est inférieur au score de précision courant :
   - le modèle d'intelligence artificielle courant n'est pas remplacé par le modèle d'intelligence artificielle expérimental ;
   - la mise à jour de la récompense associée au jeu de données sélectionné est une réduction de ladite récompense ;
le jeu de données sélectionné est le jeu de données associé à la récompense maximale ;
le procédé de paramétrage comprend, en outre, les étapes de :
   - comparaison d'un état prédit courant de l'environnement surveillé, prédit par le modèle d'intelligence artificielle courant à partir des données d'entrée, avec un état réel de l'environnement surveillé ; et
   - mise à jour des données de test à partir d'un résultat de la comparaison ;
la mise à jour des données de test comprend l'ajout, aux données de test, de tout ou partie des données d'entrée à partir desquelles l'état prédit courant a été déterminé, associées à une étiquette représentative du fait que la prédiction est correcte ou erronée.
le procédé de paramétrage comprend, en outre, les étapes de :
   - comparaison d'un état prédit courant de l'environnement surveillé, prédit par le modèle d'intelligence artificielle courant à partir des données d'entrée, avec un état réel de l'environnement surveillé ;
   - en cas de discordance entre l'état prédit courant et l'état réel de l'environnement surveillé, création d'un jeu de données supplémentaire par modification du jeu de données sur la base duquel le modèle d'intelligence artificielle courant a été entraîné, à partir de l'état prédit et de l'état réel ; et
   - stockage du jeu de données créé dans la mémoire ;
le jeu de données supplémentaire créé comprend les données du jeu de données sur la base duquel le modèle d'intelligence artificielle courant a été entraîné, auquel ont été ajoutées les données d'entrées à partir desquelles l'état prédit courant a été déterminé, associées à une étiquette représentative du fait que la prédiction est correcte ou erronée ;
à sa création, le jeu de données créé est associé à une récompense présentant une valeur supérieure à la valeur de la récompense associée à chaque autre jeu de données stocké dans la mémoire ;
le procédé de paramétrage comprend, en outre, les étapes de :
   - sélection d'au moins une partie des données d'entrée, de préférence par la mise en œuvre d'un processus de sélection de caractéristiques, pour générer au moins un jeu de données supplémentaire ; et
   - stockage du jeu de données généré dans la mémoire ;
l'algorithme par renforcement est un algorithme Q-learning, un algorithme Deep Q-Learning, ou encore un réseau de neurones.

Selon un autre aspect de l'invention, il est proposé un programme d'ordinateur comprenant des instructions exécutables qui, lorsqu'elles sont exécutées par ordinateur, mettent en œuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif de paramétrage d'une chaîne de traitement de données, la chaîne de traitement comportant un étage de prédiction mettant en œuvre un modèle d'intelligence artificielle courant, préalablement entraîné sur la base d'un jeu de données d'entraînement, pour prédire une anomalie au niveau d'un environnement surveillé muni d'au moins un capteur, à partir de données d'entrée reçues en provenance de chaque capteur,
le modèle d'intelligence artificielle courant étant associé à un score de précision courant, représentatif d'une concordance entre, d'une part, un premier état prédit de l'environnement surveillé, déterminé par le modèle d'intelligence artificielle courant à partir de données de test dépendant des données d'entrée, et, d'autre part, un état réel de l'environnement surveillé pour lesdites données de test,
le dispositif de paramétrage étant configuré pour mettre en œuvre un algorithme par renforcement comprenant les étapes de :
   - sélection d'un jeu de données parmi un ensemble de jeux de données stockés dans une mémoire, en fonction d'une récompense associée à chaque jeu de données ;
   - entraînement d'un modèle d'intelligence artificielle sur la base du jeu de données sélectionné pour obtenir un modèle d'intelligence artificielle expérimental ;
   - calcul d'un score de précision expérimental du modèle d'intelligence artificielle expérimental, représentatif d'une concordance entre, d'une part, un deuxième état prédit de l'environnement surveillé, déterminé par le modèle d'intelligence artificielle expérimental à partir des données de test, et, d'autre part, l'état réel de l'environnement surveillé pour les données de test ; et

   - en fonction d'un résultat d'une comparaison entre le score de précision courant et le score de précision expérimental :
      - remplacement ou non, dans l'étage de prédiction, du modèle d'intelligence artificielle courant par le modèle d'intelligence artificielle expérimental ; et
      - mise à jour de la récompense associée au jeu de données sélectionné.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'une chaîne de traitement associée à un dispositif de paramétrage selon l'invention ;
la figure 2 est un ordinogramme d'un procédé de paramétrage mis en œuvre par le dispositif de la figure 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

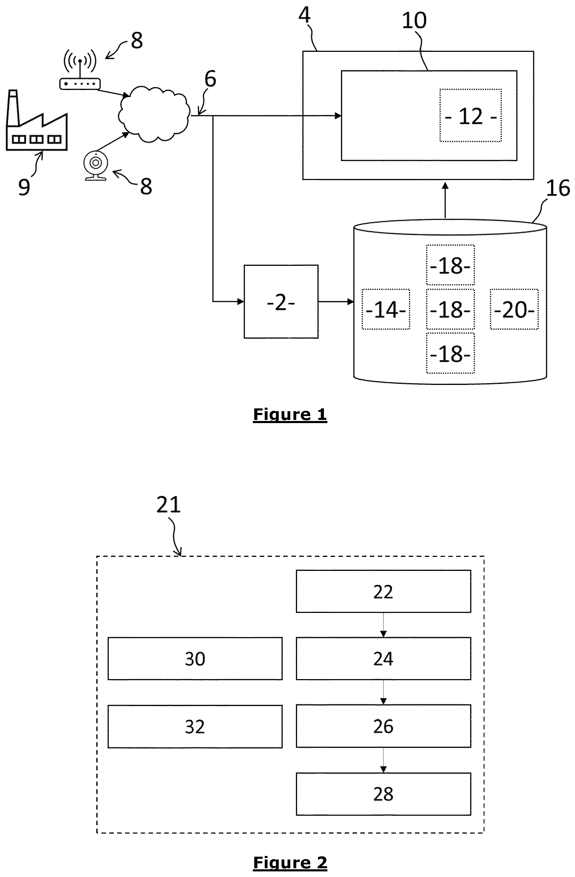

Un dispositif de paramétrage 2 selon l'invention, pour le paramétrage d'une chaîne 4 de traitement de données (par la suite appelée « chaîne de traitement »), est illustré par la figure 1.

La chaîne de traitement 4 est configurée pour traiter un flux 6 de données d'entrée (encore appelé « données d'entrée »), reçu en provenance d'au moins un capteur 8, en particulier en provenance d'au moins un objet connecté.

Chaque capteur 8 est destiné à la surveillance d'un environnement 9 prédéterminé (dit « environnement surveillé »), tel qu'une installation, une machine ou un appareil. Plus précisément, les données d'entrée 6 comprennent des mesures et des observations représentatives d'un état de l'environnement surveillé 9.

La chaîne de traitement 4 comprend un étage de prédiction 10 adapté pour, en fonctionnement, mettre en œuvre un modèle d'intelligence artificielle courant 12 afin de prédire, à partir des données d'entrée 6, l'occurrence d'une anomalie au niveau de l'environnement surveillé 9. De façon plus générale, l'étage de prédiction 10 est, de préférence, configuré pour mettre en œuvre le modèle d'intelligence artificielle courant 12 afin de prédire, à partir des données d'entrée 6, un état à venir de l'environnement surveillé 9, dit « état prédit courant ».

Le modèle d'intelligence artificielle courant 12 a été préalablement entraîné sur la base d'un jeu de données d'entraînement correspondant.

En outre, le modèle d'intelligence artificielle courant est associé à un score de précision courant P_{C}, représentatif d'une concordance entre, d'une part, un premier état prédit de l'environnement surveillé, déterminé par le modèle d'intelligence artificielle courant 12 à partir de données de test 14 dépendant des données d'entrée 6, et, d'autre part, un état réel de l'environnement surveillé 9 pour lesdites données de test (c'est-à-dire un état de l'environnement surveillé 9 pour lequel les données d'entrée 6 sont identiques aux données de test).

L'évolution de telles données de test au cours du temps sera décrite ultérieurement.

Le dispositif de paramétrage 2 est destiné à modifier un paramétrage de la chaîne de traitement 4, et plus particulièrement de son étage de prédiction 10. Plus spécifiquement, le dispositif de paramétrage 2 est destiné à modifier le paramétrage de la chaîne de traitement 4 en fonction de prédiction réalisées par la chaîne de traitement 4 à partir des données d'entrée 6.

Le dispositif de paramétrage 2 est susceptible de se présenter sous une forme matérielle, telle qu'un ordinateur, un serveur, un processeur, une puce électronique, etc. Alternativement, ou de façon additionnelle, le dispositif de paramétrage 2 est susceptible de se présenter sous une forme logicielle telle qu'un programme d'ordinateur, ou une application, par exemple une application pour un appareil utilisateur de type tablette ou smartphone.

Le dispositif de paramétrage 2 est associée à une mémoire 16 configurée pour stocker les données de test 14.

La mémoire 16 est également configurée pour stocker au moins un jeu de données 18. Chaque jeu de données 18 est associé à une récompense respective, également stockée dans la mémoire 16. L'obtention de tels jeux de données 18 sera décrite ultérieurement.

En outre, la mémoire 16 est configurée pour stocker au moins un modèle d'intelligence artificielle 20, dit « expérimental ». Chaque modèle d'intelligence artificielle expérimental 20 a été préalablement entraîné sur la base d'un jeu de données 18 correspondant parmi l'ensemble de jeux de données 18 stockés dans la mémoire 16.

Pour réaliser le paramétrage de la chaîne de traitement 4, le dispositif de paramétrage 2 est configuré pour mettre en œuvre un procédé de paramétrage 21, schématiquement illustré par la figure 2.

Le procédé de paramétrage 21 est susceptible d'être mis en œuvre à plusieurs reprises, successivement dans le temps.

Comme cela apparaît sur cette figure, le procédé de paramétrage 21 comporte une mise en œuvre d'un algorithme par renforcement comprenant une étape 22 de sélection d'un jeu de données (dite « étape de sélection »), une étape d'entraînement 24, une étape 26 de calcul de score de précision (dite « étape de calcul ») et une étape de configuration 28 successives.

De façon optionnelle, le procédé de paramétrage 21 comprend également une étape 30 d'enrichissement des données de test (dite « étape d'enrichissement ») et/ou une étape 32 de génération de jeux de données (dite « étape de génération »).

De préférence, l'algorithme par renforcement mis en œuvre par le dispositif de paramétrage 2 au cours de l'exécution de procédé de paramétrage 21 est un algorithme Q-learning, un algorithme Deep Q-Learning, ou encore un réseau de neurones.

### Sélection d'un jeu de données

Le dispositif de paramétrage 2 est configuré pour sélectionner, durant l'étape de sélection 22, un jeu de données 18 parmi l'ensemble de jeux de données 18 stockés dans la mémoire 16. Une telle sélection est réalisée sur la base de la récompense associée à chaque jeu de données 18.

Par exemple, dans le cas où un administrateur a configuré le dispositif de paramétrage 2 pour adopter une stratégie dite « de choix optimal », le dispositif de paramétrage 2 est configuré pour sélectionner le jeu de données 18 associé à la récompense maximale.

D'autres stratégies sont toutefois susceptibles d'être adoptées. Par exemple, le dispositif de paramétrage 2 est susceptible d'être configuré pour adopter une stratégie dite « exploratoire ». Dans ce cas, le dispositif de paramétrage 2 est configuré pour sélectionner un jeu de données 18 qui n'est pas nécessairement associé à la récompense maximale. Le choix entre une stratégie de choix optimal et une stratégie exploratoire dépend, par exemple, de facteurs tels qu'une variable suivant une loi de probabilité (telle qu'une loi de Bernoulli) ou la réalisation d'un événement, en fonction de la tâche spécifique en question.

### Entraînement

En outre, le dispositif de paramétrage 2 est configuré pour entraîner, au cours de l'étape d'entraînement 24, un modèle d'intelligence artificielle sur la base du jeu de données 18 sélectionné. De cette façon, un modèle d'intelligence artificielle expérimental 20 est obtenu.

Le dispositif de paramétrage 2 est également configuré pour enregistrer le modèle d'intelligence artificielle expérimental 20 obtenu dans la mémoire 16.

Le modèle d'intelligence artificielle utilisé lors de l'étape d'entraînement 24 est susceptible d'être tout modèle d'intelligence artificielle connu de l'homme du métier, par exemple un réseau de neurones.

### Calcul du score de précision

En outre, le dispositif de paramétrage 2 est configuré pour calculer, au cours de l'étape de calcul 26, un score de précision expérimental P_{E} du modèle d'intelligence artificielle expérimental 20 obtenu à l'issue de l'étape d'entraînement 24.

Le score de précision expérimental P_{E} est représentatif d'une concordance entre, d'une part, un deuxième état prédit de l'environnement surveillé, déterminé par le modèle d'intelligence artificielle expérimental 20 à partir des données de test 14, et, d'autre part, l'état réel de l'environnement surveillé 9 pour les données de test (c'est-à-dire un état de l'environnement surveillé 9 pour lequel les données d'entrée 6 sont identiques aux données de test).

### Configuration

En outre, le dispositif de paramétrage 2 est adapté pour configurer, au cours de l'étape de configuration 28, la chaîne de traitement 4 en fonction du score de précision expérimental P_{E} déterminé à l'issue de l'étape de calcul 26.

Plus précisément, le dispositif de paramétrage 2 est configuré pour comparer le score de précision courant P_{C} et le score de précision expérimental P_{E}.

En outre, le dispositif de paramétrage 2 est configuré pour, en fonction du résultat de la comparaison :
- commander le remplacement ou non, dans l'étage de prédiction 10, du modèle d'intelligence artificielle courant 12 par le modèle d'intelligence artificielle expérimental 20 ; et
- mettre à jour la récompense associée au jeu de données 18 sélectionné.

Avantageusement, si le score de précision expérimental est supérieur au score de précision courant, le dispositif de paramétrage 2 est, de préférence, configuré pour :
- commander le remplacement du modèle d'intelligence artificielle courant 12 par le modèle d'intelligence artificielle expérimental 20 ; et
- augmenter la récompense associée au jeu de données 18 sélectionné au cours de l'étape de sélection 22 est sur la base duquel a été obtenu le modèle d'intelligence artificielle expérimental 20.

Ceci est avantageux, dans la mesure où le modèle d'intelligence artificielle mis en œuvre par la chaîne de traitement est le modèle le plus performant au regard des données de test.

Avantageusement, si le score de précision expérimental P_{E} est strictement inférieur au score de précision courant P_{C}, le dispositif de paramétrage 2 est configuré pour :
- commander le maintien du modèle d'intelligence artificielle courant 12 comme modèle d'intelligence artificielle mis en œuvre par l'étage de prédiction 10 de la chaîne de traitement 4 ; et
- réduire la récompense associée au jeu de données 18 sélectionné au cours de l'étape de sélection 22 sur la base duquel a été obtenu le modèle d'intelligence artificielle expérimental 20.

Ceci est avantageux, dans la mesure où le jeu de données 18 ayant conduit à un modèle entraîné peu performant aura moins de chances d'être sélectionné au cours d'une itération suivante du procédé de paramétrage 21.

### Enrichissement des données de test

Comme indiqué précédemment, le procédé de paramétrage 21 comporte avantageusement l'étape d'enrichissement 30.

De préférence, le dispositif de paramétrage 2 est configuré pour mettre en œuvre l'étape d'enrichissement 30 à l'issue d'une intervention déclenchée par une prédiction, par le modèle d'intelligence artificielle courant 12 de la chaîne de traitement 4, de l'occurrence d'une anomalie.

Plus précisément, lorsqu'un opérateur est envoyé sur site dans le cadre d'une anomalie prédite par la chaîne de traitement 4, l'opérateur est amené à effectuer un retour sur cette intervention : l'opérateur indique si cette intervention était justifiée ou non, c'est-à-dire si la prédiction d'anomalie était erronée ou non.

En particulier, le dispositif de paramétrage 2 est configuré pour, au cours de l'étape d'enrichissement 30, comparer un état prédit courant de l'environnement surveillé 9, prédit par le modèle d'intelligence artificielle courant 12 à partir des données d'entrée 6, avec un état réel de l'environnement surveillé.

En outre, le dispositif de paramétrage 2 est configuré pour mettre à jour les données de test 14 à partir d'un résultat de la comparaison.

Dans ce cas, le dispositif de paramétrage 2 est configuré pour enrichir les données de test en y incluant les données d'entrée 6 sur la base desquelles l'opération de maintenance a été déclenchée, associées à une étiquette représentative du fait que la prédiction était correcte ou erronée (c'est-à-dire représentative du fait que l'anomalie prédite était avérée ou non).

De façon plus générale, le dispositif de paramétrage 2 est configuré pour mettre en œuvre l'étape d'enrichissement 30 à chaque observation de l'état réel de l'environnement surveillé 9. Dans ce cas, le dispositif de paramétrage 2 est configuré pour enrichir les données de test en y incluant les données d'entrée 6 sur la base desquelles un état de l'environnement surveillé 9, au moment de ladite observation, a été prédit par le modèle d'intelligence artificielle courant 12. Dans ce cas, les données d'entrée 6 sont associées à une étiquette représentative du fait que la prédiction est correcte ou erronée, l'étiquette étant déterminée par ladite observation de l'état réel de l'environnement surveillé 9.

### Génération de jeux de données

Comme mentionné précédemment, le procédé de paramétrage 21 est également susceptible de comporter l'étape de génération 32.

De préférence, le dispositif de paramétrage 2 est configuré pour mettre en œuvre l'étape de génération 32 à l'issue d'une observation de l'état réel de l'environnement surveillé 9. Une telle observation est, par exemple, le résultat d'une intervention, au niveau de l'environnement surveillé 9, déclenchée par une prédiction d'une anomalie par le modèle d'intelligence artificielle courant 12 de la chaîne de traitement 4.

Le dispositif de paramétrage 2 est notamment configuré pour générer, au cours de l'étape de génération 32, au moins un nouveau jeu de données 18 à partir des jeux de données 18 stockés dans la mémoire 16.

En particulier, le dispositif de paramétrage 2 est configuré pour, au cours de l'étape de génération 32, comparer un état prédit courant de l'environnement surveillé, prédit par le modèle d'intelligence artificielle courant 12 à partir des données d'entrée 6, avec l'état réel de l'environnement surveillé 9.

En outre, en cas de discordance entre l'état prédit courant et l'état réel de l'environnement surveillé 9, le dispositif de paramétrage 2 est configuré pour créer un jeu de données 18 supplémentaire par modification du jeu de données sur la base duquel le modèle d'intelligence artificielle courant 12 a été entraîné (dit « jeu de données d'entraînement courant »).

En particulier, le dispositif de paramétrage 2 est configuré pour modifier le jeu de données d'entraînement courant afin d'y inclure les données d'entrée 6 sur la base desquelles l'état prédit courant a été déterminé, associées à une étiquette représentative du fait que la prédiction était correcte ou erronée (c'est-à-dire représentative d'une concordance ou non entre l'état prédit courant et l'état réel observé).

Le dispositif de paramétrage 2 est également configuré pour stocker le jeu de données 18 supplémentaire ainsi créé dans la mémoire 16.

Avantageusement, dans ce cas, le dispositif de paramétrage 2 est configuré pour associer le jeu de données 18 créé, lors de sa création, à une récompense présentant une valeur supérieure à la valeur de la récompense associée à chaque autre jeu de données 18 stocké dans la mémoire 16.

De façon optionnelle, le dispositif de paramétrage 2 est configuré pour générer, au cours de l'étape de génération 32, au moins un nouveau jeu de données 18 à partir des données d'entrée 6.

Dans ce cas, le dispositif de paramétrage 2 est configuré pour appliquer un processus de sélection aux données d'entrée 6 afin d'en extraire des données dites « utiles ». Par « données utiles », il est entendu des données apportant des informations pertinentes au regard des prédictions à réaliser, c'est-à-dire permettant au modèle d'intelligence artificielle de faire des prédictions fiables.

Pour extraire les données utiles, le dispositif de paramétrage 2 est, notamment, configuré pour mettre en œuvre un processus de sélection de caractéristiques (en anglais, *« feature selection »).* Un tel processus est, par exemple, fondé sur le recours à une analyse statistique telle que le test du_{X}² (Chi-2), ou encore à l'information mutuelle (« *mutual information* » en anglais).

Le dispositif de paramétrage 2 est également configuré pour stocker le jeu de données 18 supplémentaire ainsi créé dans la mémoire 16.

### Fonctionnement

Le fonctionnement du dispositif de paramétrage 2 va maintenant être décrit en référence à la figure 2.

Durant l'étape de sélection 22, le dispositif de paramétrage 2 sélectionne, sur la base de la récompense associée à chaque jeu de données 18, un jeu de données 18 parmi l'ensemble de jeux de données 18 stockés dans la mémoire 16.

Puis, au cours de l'étape d'entraînement 24, le dispositif de paramétrage 2 entraîne un modèle d'intelligence artificielle sur la base du jeu de données 18 sélectionné. De cette façon, un modèle d'intelligence artificielle expérimental 20 est obtenu.

Puis, au cours de l'étape de calcul 26, le dispositif de paramétrage 2 calcule le score de précision expérimental P_{E} du modèle d'intelligence artificielle expérimental 20.

Puis, au cours de l'étape de configuration 28, le dispositif de paramétrage 2 configure la chaîne de traitement 4 en fonction du score de précision expérimental P_{E} déterminé.

Plus précisément, en fonction du résultat de la comparaison, le dispositif de paramétrage 2 :
- commande le remplacement ou non, dans l'étage de prédiction 10, du modèle d'intelligence artificielle courant 12 par le modèle d'intelligence artificielle expérimental 20 ; et
- met à jour la récompense associée au jeu de données 18 sélectionné.

En outre, les données d'entrée 6, représentatives de l'état de l'environnement surveillé 9, sont acheminées à destination de la chaîne de traitement 4 (pour la détermination de l'état prédit courant de l'environnement surveillé 9) et du dispositif de paramétrage 2.

Avantageusement, le dispositif de paramétrage 2 enrichit les données de test 14 au cours du temps, par la mise en œuvre de l'étape d'enrichissement 30.

Plus précisément, à l'issue d'au moins une observation de l'état réel de l'environnement surveillé 9, le dispositif de paramétrage 2 compare l'état prédit courant de l'environnement surveillé 9 avec l'état réel de l'environnement surveillé.

En outre, le dispositif de paramétrage 2 met à jour les données de test 14 à partir d'un résultat de la comparaison. En particulier, le dispositif de paramétrage 2 enrichit les données de test en y incluant les données d'entrée 6 sur la base desquelles l'état prédit courant de l'environnement surveillé 9 a été déterminé, associées à une étiquette représentative du fait que la prédiction est correcte ou erronée.

De cette façon, les données de test 14 sont enrichies, de façon à optimiser le choix du modèle d'intelligence artificielle mis en œuvre par la chaîne de traitement 4.

Avantageusement, le dispositif de paramétrage 2 génère des jeux de données 18 au cours du temps, par la mise en œuvre de l'étape de génération 32, en vue d'aboutir à des modèles d'intelligence artificielle entraînés de plus en plus performants.

Plus précisément, à l'issue d'au moins une observation de l'état réel de l'environnement surveillé 9, le dispositif de paramétrage 2 compare l'état prédit courant de l'environnement surveillé 9 avec l'état réel de l'environnement surveillé 9.

En outre, en cas de discordance entre l'état prédit courant et l'état réel de l'environnement surveillé 9, le dispositif de paramétrage 2 modifie le jeu de données d'entraînement courant afin d'y inclure les données d'entrée 6 sur la base desquelles l'état prédit courant a été déterminé, associées à une étiquette représentative du fait que la prédiction était correcte ou erronée (c'est-à-dire représentative d'une concordance ou non entre l'état prédit courant et l'état réel observé).

De cette façon, un nouveau jeu de données 18 est obtenu, sur la base duquel un modèle d'intelligence artificielle pourra être entraîné au cours de l'étape d'entraînement 24.

Bien entendu l'invention n'est pas limitée aux exemples qui viennent d'être décrits.

## Revendications

1. Procédé (21) de paramétrage d'une chaîne (4) de traitement de données, la chaîne de traitement (4) comportant un étage de prédiction (10) mettant en œuvre un modèle d'intelligence artificielle courant (12), préalablement entraîné sur la base d'un jeu de données d'entraînement, pour prédire une anomalie au niveau d'un environnement surveillé (9) muni d'au moins un capteur, à partir de données d'entrée (6) reçues en provenance de chaque capteur,
le modèle d'intelligence artificielle courant (12) étant associé à un score de précision courant, représentatif d'une concordance entre, d'une part, un premier état prédit de l'environnement surveillé (9), déterminé par le modèle d'intelligence artificielle courant (12) à partir de données de test (14) dépendant des données d'entrée (6), et, d'autre part, un état réel de l'environnement surveillé (9) pour lesdites données de test (14),
le procédé de paramétrage étant mis en œuvre par ordinateur et comprenant une mise en œuvre d'un algorithme par renforcement comprenant les étapes de :
- sélection d'un jeu de données (18) parmi un ensemble de jeux de données (18) stockés dans une mémoire, en fonction d'une récompense associée à chaque jeu de données (18) ;
- entraînement d'un modèle d'intelligence artificielle sur la base du jeu de données (18) sélectionné pour obtenir un modèle d'intelligence artificielle expérimental (20) ;
- calcul d'un score de précision expérimental du modèle d'intelligence artificielle expérimental (20), représentatif d'une concordance entre, d'une part, un deuxième état prédit de l'environnement surveillé (9), déterminé par le modèle d'intelligence artificielle expérimental (20) à partir des données de test (14), et, d'autre part, l'état réel de l'environnement surveillé (9) pour les données de test (14) ; et
- en fonction d'un résultat d'une comparaison entre le score de précision courant et le score de précision expérimental :
• remplacement ou non, dans l'étage de prédiction (10), du modèle d'intelligence artificielle courant (12) par le modèle d'intelligence artificielle expérimental (20) ; et
• mise à jour de la récompense associée au jeu de données (18) sélectionné.

2. Procédé de paramétrage (21) selon la revendication 1, dans lequel, si le score de précision expérimental est supérieur au score de précision courant :
- le modèle d'intelligence artificielle courant (12) est remplacé par le modèle d'intelligence artificielle expérimental (20) ; et
- la mise à jour de la récompense associée au jeu de données (18) sélectionné est une augmentation de ladite récompense.

3. Procédé de paramétrage (21) selon la revendication 1 ou 2, dans lequel, si le score de précision expérimental est inférieur au score de précision courant :
- le modèle d'intelligence artificielle courant (12) n'est pas remplacé par le modèle d'intelligence artificielle expérimental (20) ;
- la mise à jour de la récompense associée au jeu de données (18) sélectionné est une réduction de ladite récompense.

4. Procédé de paramétrage (21) selon l'une quelconque des revendication 1 à 3, dans lequel le jeu de données (18) sélectionné est le jeu de données (18) associé à la récompense maximale.

5. Procédé de paramétrage (21) selon l'une quelconque des revendications 1 à 4, comprenant, en outre, les étapes de :
- comparaison d'un état prédit courant de l'environnement surveillé (9), prédit par le modèle d'intelligence artificielle courant (12) à partir des données d'entrée (6), avec un état réel de l'environnement surveillé (9) ; et
- mise à jour des données de test (14) à partir d'un résultat de la comparaison.

6. Procédé de paramétrage (21) selon la revendication 5, dans lequel la mise à jour des données de test (14) comprend l'ajout, aux données de test (14), de tout ou partie des données d'entrée (6) à partir desquelles l'état prédit courant a été déterminé, associées à une étiquette représentative du fait que la prédiction est correcte ou erronée.

7. Procédé de paramétrage (21) selon l'une quelconque des revendications 1 à 6, comprenant, en outre, les étapes de :
- comparaison d'un état prédit courant de l'environnement surveillé (9), prédit par le modèle d'intelligence artificielle courant (12) à partir des données d'entrée (6), avec un état réel de l'environnement surveillé (9) ;
- en cas de discordance entre l'état prédit courant et l'état réel de l'environnement surveillé (9), création d'un jeu de données (18) supplémentaire par modification du jeu de données (18) sur la base duquel le modèle d'intelligence artificielle courant (12) a été entraîné, à partir de l'état prédit et de l'état réel ; et
- stockage du jeu de données (18) créé dans la mémoire.

8. Procédé de paramétrage (21) selon la revendication 7, dans lequel le jeu de données (18) supplémentaire créé comprend les données du jeu de données (18) sur la base duquel le modèle d'intelligence artificielle courant (12) a été entraîné, auquel ont été ajoutées les données d'entrées (6) à partir desquelles l'état prédit courant a été déterminé, associées à une étiquette représentative du fait que la prédiction est correcte ou erronée.

9. Procédé de paramétrage (21) selon la revendication 7 ou 8, dans lequel, à sa création, le jeu de données (18) créé est associé à une récompense présentant une valeur supérieure à la valeur de la récompense associée à chaque autre jeu de données (18) stocké dans la mémoire.

10. Procédé de paramétrage (21) selon l'une quelconque des revendications 1 à 9, comprenant, en outre, les étapes de :
- sélection d'au moins une partie des données d'entrée (6), de préférence par la mise en œuvre d'un processus de sélection de caractéristiques, pour générer au moins un jeu de données (18) supplémentaire ; et
- stockage du jeu de données (18) généré dans la mémoire.

11. Procédé de paramétrage (21) selon l'une quelconque des revendications 1 à 10, dans lequel l'algorithme par renforcement est un algorithme Q-learning, un algorithme Deep Q-Learning, ou encore un réseau de neurones.

12. Programme d'ordinateur comprenant des instructions exécutables qui, lorsqu'elles sont exécutées par ordinateur, mettent en en œuvre les étapes du procédé (21) selon l'une quelconque des revendications 1 à 11.

13. Dispositif (2) de paramétrage d'une chaîne (4) de traitement de données, la chaîne de traitement (4) comportant un étage de prédiction (10) mettant en œuvre un modèle d'intelligence artificielle courant (12), préalablement entraîné sur la base d'un jeu de données d'entraînement, pour prédire une anomalie au niveau d'un environnement surveillé (9) muni d'au moins un capteur, à partir de données d'entrée (6) reçues en provenance de chaque capteur,
le modèle d'intelligence artificielle courant (12) étant associé à un score de précision courant, représentatif d'une concordance entre, d'une part, un premier état prédit de l'environnement surveillé (9), déterminé par le modèle d'intelligence artificielle courant (12) à partir de données de test (14) dépendant des données d'entrée (6), et, d'autre part, un état réel de l'environnement surveillé (9) pour lesdites données de test (14),
le dispositif de paramétrage (2) étant configuré pour mettre en œuvre un algorithme par renforcement comprenant les étapes de :
- sélection d'un jeu de données (18) parmi un ensemble de jeux de données (18) stockés dans une mémoire, en fonction d'une récompense associée à chaque jeu de données (18) ;
- entraînement d'un modèle d'intelligence artificielle sur la base du jeu de données (18) sélectionné pour obtenir un modèle d'intelligence artificielle expérimental (20) ;
- calcul d'un score de précision expérimental du modèle d'intelligence artificielle expérimental (20), représentatif d'une concordance entre, d'une part, un deuxième état prédit de l'environnement surveillé (9), déterminé par le modèle d'intelligence artificielle expérimental (20) à partir des données de test (14), et, d'autre part, l'état réel de l'environnement surveillé (9) pour les données de test (14) ; et
- en fonction d'un résultat d'une comparaison entre le score de précision courant et le score de précision expérimental :
• remplacement ou non, dans l'étage de prédiction (10), du modèle d'intelligence artificielle courant (12) par le modèle d'intelligence artificielle expérimental (20) ; et
• mise à jour de la récompense associée au jeu de données (18) sélectionné.

## Patentansprüche

1. Verfahren (21) zum Parametrisieren einer Datenverarbeitungskette (4), wobei die Verarbeitungskette (4) eine Vorhersagestufe (10) umfasst, die ein aktuelles Modell künstlicher Intelligenz (12) implementiert, das zuvor auf der Basis eines Trainingsdatensatzes trainiert wurde, um eine Anomalie in einer überwachten Umgebung (9), die mit mindestens einem Sensor ausgestattet ist, ausgehend von Eingabedaten (6), die von jedem Sensor empfangen wurden, vorherzusagen,
wobei das aktuelle Modell künstlicher Intelligenz (12) einem aktuellen Präzisionswert zugeordnet ist, der eine Übereinstimmung zwischen einerseits einem ersten vorhergesagten Zustand der überwachten Umgebung (9), der vom aktuellen Modell künstlicher Intelligenz (12) ausgehend von Testdaten (14) in Abhängigkeit von den Eingabedaten (6) bestimmt wird, und andererseits einem Ist-Zustand der überwachten Umgebung (9) für diese Testdaten (14) darstellt,
wobei das Parametrisierungsverfahren durch einen Computer implementiert wird und eine Implementierung eines Verstärkungsalgorithmus umfasst, der die folgenden Schritte umfasst:
- Auswählen eines Datensatzes (18) aus einer Menge von Datensätzen (18), die in einem Speicher gespeichert sind, in Abhängigkeit von einer jedem Datensatz (18) zugeordneten Belohnung;
- Trainieren eines Modells künstlicher Intelligenz basierend auf dem ausgewählten Datensatz (18), um derart ein experimentelles Modell künstlicher Intelligenz (20) zu erhalten;
- Berechnen eines experimentellen Präzisionswerts des experimentellen Modells künstlicher Intelligenz (20), der eine Übereinstimmung zwischen einerseits einem zweiten vorhergesagten Zustand der überwachten Umgebung (9), der durch das experimentelle Modell künstlicher Intelligenz (20) ausgehend von den Testdaten (14) bestimmt wurde, und andererseits dem Ist-Zustand der überwachten Umgebung (9) für die Testdaten (14) darstellt; und
- in Abhängigkeit von einem Ergebnis eines Vergleichs zwischen dem aktuellen Präzisionswert und dem experimentellen Präzisionswert:
• Ersetzen, oder nicht, des aktuellen Modells künstlicher Intelligenz (12) durch das experimentelle Modell künstlicher Intelligenz (20) auf der Vorhersagestufe (10); und
• Aktualisieren der dem ausgewählten Datensatz zugeordneten Belohnung (18).

2. Parametrisierungsverfahren (21) nach Anspruch 1, wobei, wenn der experimentelle Präzisionswert größer ist als der aktuelle Präzisionswert:
- das aktuelle Modell künstlicher Intelligenz (12) durch das experimentelle Modell künstlicher Intelligenz (20) ersetzt wird; und
- das Aktualisieren der dem ausgewählten Datensatz (18) zugeordneten Belohnung ein Erhöhen dieser Belohnung ist.

3. Parametrisierungsverfahren (21) nach Anspruch 1 oder 2, wobei, wenn der experimentelle Präzisionswert kleiner ist als der aktuelle Präzisionswert:
- das aktuelle Modell künstlicher Intelligenz (12) nicht durch das experimentelle Modell künstlicher Intelligenz (20) ersetzt wird;
- das Aktualisieren der dem ausgewählten Datensatz zugeordneten Belohnung (18) ein Verringern dieser Belohnung ist.

4. Parametrisierungsverfahren (21) nach einem der Ansprüche 1 bis 3, wobei der ausgewählte Datensatz (18) der Datensatz (18) ist, der der maximalen Belohnung zugeordnet ist.

5. Parametrisierungsverfahren (21) nach einem der Ansprüche 1 bis 4, ferner umfassend die folgenden Schritte:
- Vergleichen eines aktuellen vorhergesagten Zustands der überwachten Umgebung (9), der vom aktuellen Modell künstlicher Intelligenz (12) ausgehend von den Eingabedaten (6) vorhergesagt wurde, mit einem Ist-Zustand der überwachten Umgebung (9); und
- Aktualisieren der Testdaten (14) ausgehend von einem Vergleichsergebnis.

6. Parametrisierungsverfahren (21) nach Anspruch 5, wobei das Aktualisieren der Testdaten (14) das vollständige oder teilweise Hinzufügen der Eingabedaten (6), ausgehend von denen der aktuelle vorhergesagte Zustand bestimmt wurde und die einem Label zugeordnet sind, das angibt, ob die Vorhersage richtig oder falsch ist, zu den Testdaten (14) umfasst.

7. Parametrisierungsverfahren (21) nach einem der Ansprüche 1 bis 6, ferner umfassend die folgenden Schritte:
- Vergleichen eines aktuellen vorhergesagten Zustands der überwachten Umgebung (9), der vom aktuellen Modell künstlicher Intelligenz (12) ausgehend von den Eingabedaten (6) vorhergesagt wurde, mit einem Ist-Zustand der überwachten Umgebung (9);
- im Fall einer Diskrepanz zwischen dem aktuellen vorhergesagten Zustand und dem Ist-Zustand der überwachten Umgebung (9), Erstellen eines zusätzlichen Datensatzes (18) durch Modifikation des Datensatzes (18), auf dessen Basis das aktuelle Modell künstlicher Intelligenz (12) trainiert wurde, ausgehend von dem vorhergesagten Zustand und dem Ist-Zustand; und
- Speichern des erstellten Datensatzes (18) im Speicher.

8. Parametrisierungsverfahren (21) nach Anspruch 7, wobei der zusätzlich erstellte Datensatz (18) die Daten des Datensatzes (18) umfasst, auf dessen Basis das aktuelle Modell künstlicher Intelligenz (12) trainiert wurde, zu dem die Eingabedaten (6) hinzugefügt wurden, ausgehend von denen der aktuelle vorhergesagte Zustand bestimmt wurde und die einem Label zugeordnet sind, das angibt, ob die Vorhersage richtig oder falsch ist.

9. Parametrisierungsverfahren (21) nach Anspruch 7 oder 8, wobei der erstellte Datensatz (18) bei der Erstellung einer Belohnung zugeordnet wird, die einen Wert darstellt, der höher als der Wert der Belohnung ist, die jedem anderen im Speicher gespeicherten Datensatz (18) zugeordnet ist.

10. Parametrisierungsverfahren (21) nach einem der Ansprüche 1 bis 9, ferner umfassend die folgenden Schritte:
- Auswählen zumindest eines Teils der Eingabedaten (6), vorzugsweise durch Implementieren eines Prozesses des Auswählens von Eigenschaften, um derart zumindest einen zusätzlichen Datensatz (18) zu generieren; und
- Speichern des generierten Datensatzes (18) im Speicher.

11. Parametrisierungsverfahren (21) nach einem der Ansprüche 1 bis 10, wobei der Verstärkungsalgorithmus ein Q-Learning-Algorithmus, ein Deep Q-Learning-Algorithmus oder ein neuronales Netzwerk ist.

12. Computerprogramm, das ausführbare Anweisungen umfasst, die, wenn sie von einem Computer ausgeführt werden, die Schritte des Verfahrens (21) nach einem der Ansprüche 1 bis 11 implementieren.

13. Vorrichtung (2) zum Parametrisieren einer Datenverarbeitungskette (4), wobei die Verarbeitungskette (4) eine Vorhersagestufe (10) umfasst, die ein aktuelles Modell künstlicher Intelligenz (12) implementiert, das zuvor auf der Basis eines Trainingsdatensatzes trainiert wurde, um eine Anomalie in einer überwachten Umgebung (9), die mit mindestens einem Sensor ausgestattet ist, ausgehend von Eingabedaten (6), die von jedem Sensor empfangen wurden, vorherzusagen,
wobei das aktuelle Modell künstlicher Intelligenz (12) einem aktuellen Präzisionswert zugeordnet ist, der eine Übereinstimmung zwischen einerseits einem ersten vorhergesagten Zustand der überwachten Umgebung (9), der vom aktuellen Modell künstlicher Intelligenz (12) ausgehend von Testdaten (14) in Abhängigkeit von den Eingabedaten (6) bestimmt wird, und andererseits einem Ist-Zustand der überwachten Umgebung (9) für diese Testdaten (14) darstellt,
wobei die Parametrisierungsvorrichtung (2) dazu konfiguriert ist, einen Verstärkungsalgorithmus zu implementieren, der die folgenden Schritte umfasst:
- Auswählen eines Datensatzes (18) aus einer Menge von Datensätzen (18), die in einem Speicher gespeichert sind, in Abhängigkeit von einer jedem Datensatz (18) zugeordneten Belohnung;
- Trainieren eines Modells künstlicher Intelligenz basierend auf dem ausgewählten Datensatz (18), um derart ein experimentelles Modell künstlicher Intelligenz (20) zu erhalten;
- Berechnen eines experimentellen Präzisionswerts des experimentellen Modells künstlicher Intelligenz (20), der eine Übereinstimmung zwischen einerseits einem zweiten vorhergesagten Zustand der überwachten Umgebung (9), der durch das experimentelle Modell künstlicher Intelligenz (20) ausgehend von den Testdaten (14) bestimmt wurde, und andererseits dem Ist-Zustand der überwachten Umgebung (9) für die Testdaten (14) darstellt; und
- in Abhängigkeit von einem Ergebnis eines Vergleichs zwischen dem aktuellen Präzisionswert und dem experimentellen Präzisionswert:
• Ersetzen, oder nicht, des aktuellen Modells künstlicher Intelligenz (12) durch das experimentelle Modell künstlicher Intelligenz (20) auf der Vorhersagestufe (10); und
• Aktualisieren der dem ausgewählten Datensatz zugeordneten Belohnung (18).

## Claims

1. Method (21) for configuring a data processing chain (4), the processing chain (4) comprising a prediction stage (10) implementing a current artificial intelligence model (12) trained beforehand on a training dataset, in order to predict an anomaly in a monitored environment (9) provided with at least one sensor, on the basis of input data (6) received from each sensor,
the current artificial intelligence model (12) being associated with a current accuracy score representative of a concordance between, on the one hand, a first predicted state of the monitored environment (9), which first predicted state is determined by the current artificial intelligence model (12) on the basis of test data (14) which are dependent on the input data (6), and, on the other hand, an actual state of the monitored environment (9) for said test data (14),
the configuring method being computer-implemented and comprising implementing a reinforcement algorithm comprising the steps of:
- selecting a dataset (18) from a group of datasets (18) stored in a memory, on the basis of a reward associated with each dataset (18);
- training an artificial intelligence model on the selected dataset (18) in order to obtain an experimental artificial intelligence model (20);
- computing an experimental accuracy score for the experimental artificial intelligence model (20), which experimental accuracy score is representative of a concordance between, on the one hand, a second predicted state of the monitored environment (9), which second predicted state is determined by the experimental artificial intelligence model (20) on the basis of the test data (14), and, on the other hand, the actual state of the monitored environment (9) for the test data (14); and
- on the basis of a result of a comparison between the current accuracy score and the experimental accuracy score:
• replacing or not the current artificial intelligence model (12) with the experimental artificial intelligence model (20) in the prediction stage (10); and
• updating the reward associated with the selected dataset (18).

2. Configuring method (21) according to claim 1, wherein, if the experimental accuracy score is higher than the current accuracy score:
- the current artificial intelligence model (12) is replaced with the experimental artificial intelligence model (20); and
- the update of the reward associated with the selected dataset (18) is an increase of said reward.

3. Configuring method (21) according to claim 1 or 2, wherein, if the experimental accuracy score is lower than the current accuracy score:
- the current artificial intelligence model (12) is not replaced with the experimental artificial intelligence model (20);
- the update of the reward associated with the selected dataset (18) is a decrease of said reward.

4. Configuring method (21) according to any of claims 1 to 3, wherein the selected dataset (18) is the dataset (18) associated with the maximum reward.

5. Configuring method (21) according to any of claims 1 to 4, further comprising the steps of:
- comparing a current predicted state of the monitored environment (9), which current predicted state is predicted by the current artificial intelligence model (12) on the basis of the input data (6), with an actual state of the monitored environment (9); and
- updating the test data (14) on the basis of a result of the comparison.

6. Configuring method (21) according to claim 5, wherein updating the test data (14) comprises adding to the test data (14) some or all of the input data (6) on the basis of which the current predicted state was determined and which are associated with a label representative of whether the prediction is correct or incorrect.

7. Configuring method (21) according to any of claims 1 to 6, further comprising the steps of:
- comparing a current predicted state of the monitored environment (9), which current predicted state is predicted by the current artificial intelligence model (12) on the basis of the input data (6), with an actual state of the monitored environment (9);
- in the event of a discrepancy between the current predicted state and the actual state of the monitored environment (9), creating an additional dataset (18) by modifying, on the basis of the predicted state and the actual state, the dataset (18) on which the current artificial intelligence model (12) was trained; and
- storing the created dataset (18) in the memory.

8. Configuring method (21) according to claim 7, wherein the created additional dataset (18) comprises the data from the dataset (18) on which the current artificial intelligence model (12) was trained and to which were added the input data (6) on the basis of which the current predicted state was determined, said input data being associated with a label representative of whether the prediction is correct or incorrect.

9. Configuring method (21) according to claim 7 or 8, wherein, on creation, the created dataset (18) is associated with a reward having a value greater than the value of the reward associated with each of the other datasets (18) stored in the memory.

10. Configuring method (21) according to any of claims 1 to 9, further comprising the steps of:
- selecting at least some of the input data (6), preferably by implementing a feature selection process, in order to generate at least one additional dataset (18); and
- storing the generated dataset (18) in the memory.

11. Configuring method (21) according to any of claims 1 to 10, wherein the reinforcement algorithm is a Q-learning algorithm, a Deep Q-Learning algorithm or a neural network.

12. Computer program comprising executable instructions which, when they are executed by a computer, implement the steps of the method (21) according to any of claims 1 to 11.

13. Device (2) for configuring a data processing chain (4), the processing chain (4) comprising a prediction stage (10) implementing a current artificial intelligence model (12) trained beforehand on a training dataset, in order to predict an anomaly in a monitored environment (9) provided with at least one sensor, on the basis of input data (6) received from each sensor,
the current artificial intelligence model (12) being associated with a current accuracy score representative of a concordance between, on the one hand, a first predicted state of the monitored environment (9), which first predicted state is determined by the current artificial intelligence model (12) on the basis of test data (14) which are dependent on the input data (6), and, on the other hand, an actual state of the monitored environment (9) for said test data (14),
the configuring device (2) being set up to implement a reinforcement algorithm comprising the steps of:
- selecting a dataset (18) from a group of datasets (18) stored in a memory, on the basis of a reward associated with each dataset (18);
- training an artificial intelligence model on the selected dataset (18) in order to obtain an experimental artificial intelligence model (20);
- computing an experimental accuracy score for the experimental artificial intelligence model (20), which experimental accuracy score is representative of a concordance between, on the one hand, a second predicted state of the monitored environment (9), which second predicted state is determined by the experimental artificial intelligence model (20) on the basis of the test data (14), and, on the other hand, the actual state of the monitored environment (9) for the test data (14); and
- on the basis of a result of a comparison between the current accuracy score and the experimental accuracy score:
• replacing or not the current artificial intelligence model (12) with the experimental artificial intelligence model (20) in the prediction stage (10); and
• updating the reward associated with the selected dataset (18).
